# EUROPÄISCHE PATENTSCHRIFT

(11) **EP 1 190 663 B1**
(45) Veröffentlichungstag und Bekanntmachung des Hinweises auf die Patenterteilung: **04.05.2005**
(21) Anmeldenummer: 01120840.2
(22) Anmeldetag: 30.08.2001
(51) Int. Cl.: A47L 13/20

(54) **Wischmop**
Mop
Balai à laver

(30) Priorität: 22.09.2000 DE 20016620 U
(43) Veröffentlichungstag der Anmeldung: 27.03.2002
(73) Patentinhaber: adsorb-med GmbH, 39218 Schönebeck (DE)
(72) Erfinder: Puschendorf, Carsten, 38179 Schwülper (DE)
(74) Vertreter: Patentanwälte Thömen & Körner

(56) Entgegenhaltungen:
- Keine einschlägigen Dokumente gefunden

## Beschreibung

Die Erfindung betrifft einen Wischmop, der an einer Seite einen Reinigungsflor und an der gegenüberliegenden Seite zwei, an den Seitenendbereichen vorgesehene, zueinander hin offene Aufnahmetaschen aufweist, die mittels aufgesetzter Taschenlagen gebildet sind und in die die Endabschnitte eines vorzugsweise klappbaren Wischmophalters einsteckbar sind.

Solche Wischmops sind hinreichend bekannt und dienen zum Aufnehmen von Verunreinigungen auf ebenen Flächen, wie Böden oder Wänden. Am Wischmop sind die für die Befestigung des in der Regel klappbar gehaltenen Wischmophalters an den seitlichen Endabschnitten zwei einander gegenüberliegende, zueinander hin offene Taschen vorgesehen, in welche Halterenden des Wischmophalters eingesteckt werden, wodurch der Wischmop über den Wischmophalter gespannt wird. Die Taschen erstrecken sich bei bekannten Wischmops im wesentlichen über die gesamte Breite, abgesehen von schmalen, vom Abnähen herrührenden Randstreifen. Sie können mittels separat aufgenähter Taschenlagen oder mittels seitlich verlängerter Wischmopabschnitte oder einer Stofflage des Wischmops, die umgeschlagen und durch Aufnähen aufgesetzt werden und die Taschenlagen bilden, gebildet werden.

Derartige Wischs werden zur Reinigung der Böden von gewerblichen Gebäuden und insbesondere von Altenheimen, Pflegeheimen, Krankenhäusern, Kliniken und anderen medizinischen Einrichtungen verwendet. In Bereichen, in denen alte und kranke Menschen leben und versorgt werden, herrschen besonders strenge Anforderungen an die Hygiene, da diese Einrichtungen besonders mit Krankheitserregern und -keimen belastet sind. Hier hat man bislang nach dem Wischvorgang den Wischmop bzw. den Wischmopbezug , chemisch oder thermisch gewaschen oder auf andere Weise desinfiziert und nach dem Waschen erneut zur Verwendung ausgegeben.

Unter dem im nachfolgenden verwendeten Begriff "Waschen" ist in erster Linie das Reinigen, Waschen, Säubern und Desinfizieren des Wischmops selbst zu verstehen.

Die Kontrolle der Waschintervalle, der Durchführung der Wäsche, die Überwachung der Lebensdauer eines Wischmops und andere wichtige Parameter fanden bislang eine zu geringe Beachtung. Bisher gibt es praktisch keine verifizierbare Kontrollmöglichkeit einzelner, relevanter Parameter, was insbesondere daran liegt, daß bislang die einzelnen Wischmops nicht zu individualisieren waren.

Hier setzt die Erfindung ein, welcher die Aufgabe zugrunde liegt, einen Wischmop der eingangs geschilderten Gattung zu schaffen, der durch individualisierende Merkmale im Wischmop selbst bezüglich seines Lebensalters, der Anzahl der bislang durchgeführten Wäschen und weiterer Kontrollparameter in jedem Stadium seiner Lebensdauer überwacht werden kann.

Diese Aufgabe wird mit einem Wischmop der eingangs geschilderten Art gelöst, welcher die Merkmale des kennzeichnenden Teils des Patentanspruch 1 aufweist.

Erfindungsgemäß ist vorgesehen, daß wenigstens ein Datenträger fest mit dem Wischmop verbunden ist, wobei der Datenträger mit den Wischmop individualisierenden Daten versehen ist, welche durch ein Lesegerät erfaßbar sind.

Die Aufgabe wird also auf überraschend einfache Art und Weise dadurch gelöst, daß der Wischmop einen Datenträger umfaßt, welcher mit dem Wischmop unverlierbar verbunden ist, so daß der Wischmop ab Herstellung bis zu Erreichung des durch Abnutzungsprozesse bedingten Lebensalters in jedem beliebigen Stadium durch die im Datenträger enthaltenen Daten verifizierbar überwacht werden kann. Die auf dem Datenträger enthaltenen, den Wischmop individualisierenden Daten werden dabei in der Regel eine Seriennummer, das Herstellungsdatum, Angabe über den Hersteller, Angaben über den Eigentümer, also z. B. der Namen des Krankenhauses umfassen. Dabei können auch weitere Daten auf dem Datenträger enthalten sein.

Wird der Wischmop bestimmungsgemäß zum Reinigen von Böden benutzt, kann anschließend die Benutzung registriert werden und nach mehreren Einsätzen bei einer Kontrolle bestimmt werden, wie oft der Wischmop bereits benutzt wurde.

Hierzu wird der Wischmop über ein Lesegerät geführt, was auch automatisiert vonstatten gehen kann. Zeigt das Lesegerät dann eine vorgegebene, maximale Anzahl von Benutzungseinsätzen an, wird der Wischmop zu einem internen oder externen Wäschereibetrieb weitergeleitet.

Im Wäschereibetrieb wird der Wischmop dann gewaschen, in eine desinfizierte oder sterile Kunststoffolie eingeschweißt und vor oder nach dem Einschweißen in die Kunststoffolie wiederum über das Lesegerät geführt.

In die Kunststoffolie eingeschweißt kehrt der Wischmop anschließend wieder zum Verwender zurück, wo er erneut seiner bestimmungsgemäßen Verwendung zugeführt wird.

Am Einsatzort sowie im Wäschereibetrieb kann die Anzahl der bereits durchgeführten Wäschen kontrolliert und somit das Erreichen der maximalen Lebensdauer eines Wischmops bestimmt werden. Bei Erreichen der maximalen Lebensdauer wird der Wischmop ausgesondert und vernichtet.

Der Datenträger umfasst einen elektronischen Speicherchip. Dieser hat den Vorteil, daß er eine höhere Anzahl individueller Informationen speichern kann und die Daten nicht durch Verschmutzung unlesbar werden. Ferner ist eine Manipulation der Daten erschwert.

Vorzugsweise ist der Speicherchip durch eine Lese-/Schreibgerät sowohl hinsichtlich der gespeicherten Daten lesbar als auch mit aktualisierten Daten beschreibbar. Dadurch besteht die Möglichkeit, auch Angaben zum Datum der ersten, zweiten usw. bis zur letzten Wäsche direkt im Speicherchip einzuspeisen. Daraus läßt sich die Häufigkeit der Verwendung des Wischmops im Wischeinsatz sowie der Ort und die Qualität der vorgenommenen Wäsche ermitteln.

In praktischen Ausgestaltungen der Erfindung ist vorgesehen, daß der Speicherchip in eine Taschenlage des Wischmops eingenäht ist oder, alternativ, daß der Speicherchip in einen Randstreifen des Wischmops eingenäht ist.

Diese beiden Lagen, also einmal innerhalb der Taschenlage und einmal innerhalb des Randstreifens, haben sich als praktisch erwiesen, da dies Bereiche sind, die für den eigentlichen Boden-Reinigungsablauf nicht hinderlich sind, da sich hier keine unerwünschten Abweichungen von einer mehr oder weniger planen Fläche ergeben, und andererseits sind dies Bereiche, in denen der Chip selbst gut vor möglichen Beschädigungen geschützt ist. Auch beim Übereinanderstapeln von mehreren, beispielsweise zwanzig Wischmops haben sich diese Bereiche als vorteilhaft erwiesen, da hier dann die Gesamtdicke eines Paketes von zehn, zwanzig oder mehr Wischmops nur unmerklich in diesen Bereichen erhöht wird.

Dies um so mehr, wenn - was gemäß einer praktischen Ausgestaltung der Erfindung vorgesehen ist - ein Chip in die Taschenlage eines ersten Wischmops so eingenäht ist, daß ein Chip eines zu Lager- und Transportzwecken zweiten, auf dem ersten Wischmop aufliegenden Wischmops, zueinander versetzt sind. Das heißt, daß die Chips bei der Herstellung nicht an stets gleicher Stelle in die Taschenlagen der Wischmops eingenäht werden, sondern daß die Verteilung der Chips von mehreren Wischmops zufällig oder in einem bestimmten Muster erfolgt. Dadurch ist gewährleistet, daß beim Aufeinanderstapeln mehrerer Wischmops es sehr unwahrscheinlich ist, daß beispielsweise zehn Chips der Wischmops genau übereinander zu liegen kommen.

In einer vorteilhaften Ausgestaltung der Erfindung kann vorgesehen sein, daß der Speicherchip Teil eines Transponders ist. Transponder haben sich nicht nur bei der berührungslosen Datenerfassung und -einspeisung bewährt, sie können auch dazu dienen, sonst schwer erfaßbare Daten und Parameter zu kontrollieren. Ein Problem ist nämlich der kaum nachvollziehbare Schwund von Wischmops im Krankenhausbetrieb und ferner die Einhaltung von Qualitätsvorgaben an den Gebäudereiniger. Sind aber entsprechende Lesegeräte für Transponder an einer Vielzahl von Orten im Krankenhausgebäude installiert, lassen sich nachvollziehbare und eindeutige Erkenntnisse beispielsweise über den Verbleib eines einzelnen Wischmops gewinnen.

In einer weiteren praktischen Ausgestaltung der Erfindung ist schließlich vorgesehen, daß der Wischmop in eine desinfizierte Kunststoffolie eingeschweißt ist.

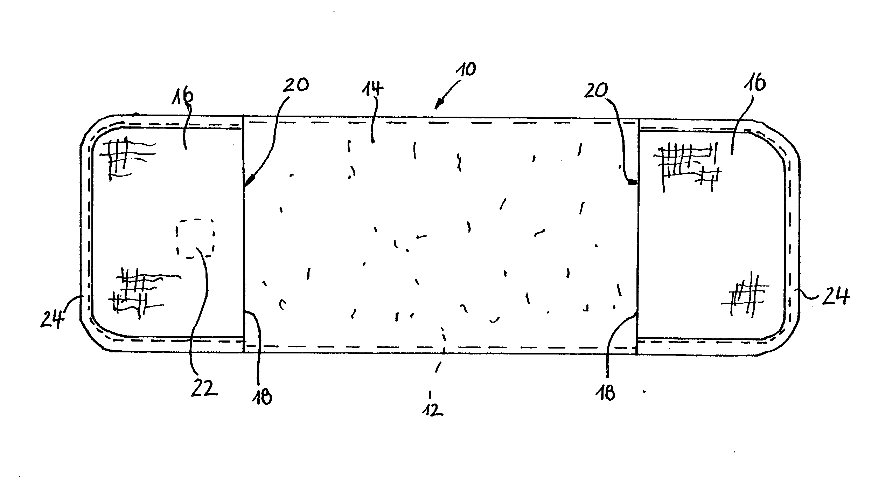

Weitere Ausgestaltungen der Erfindung werden anhand eines Ausführungsbeispiels in der Zeichnung, der nachfolgenden Beschreibung und der Schutzansprüche näher erläutert.

In der einzigen Figur ist in Aufsicht ein Ausführungsbeispiel eines erfindungsgemäßen Wischmops 10 dargestellt, auf dessen Reinigungsseite, d. h. auf dessen Unterseite, ein Reinigungsflor 12 aufgebracht ist. An der gegenüberliegenden Seite 14 sind an den Endabschnitten zwei Taschenlagen 16, bei denen es sich zweckmäßigerweise um Stofflagen 18 handelt, aufgenäht. Im gezeigten Ausführungsbeispiel bilden Stofflagen 18 jeweils eine Taschenlage 16.

Die Taschenlagen 16 sind dabei so aufgebracht, daß zwei zueinander hin offene Aufnahmetaschen 20 gebildet sind, in welche ein nicht dargestellter Wischmophalter eingesteckt werden kann, so daß der Wischmop 10 über diesen Halter gespannt wird. Die Taschenlagen 16 können aber auch mittels verlängerter Seitenabschnitte des Wischmops 10 oder einer Stofflage 18 des Wischmops 10, die umgeschlagen und aufgesetzt werden, gebildet sein.

In einer aus zwei Stofflagen 18 bestehenden Taschenlage 16 des Wischmops 10 ist ein elektronischer Speicherchip, wie in der Figur mit gestrichelten Linien angedeutet, eingenäht. Hierzu wird der Speicherchip 22 vor dem Vernähen der Stofflagen 18 zwischen diese gelegt; anschließend werden die Stofflagen 18 zur Bildung der Taschenlagen 16 miteinander vernäht, wodurch die Festlegung des Speicherchips gewährleistet ist.

Nach dem Herstellen des Wischmops 10 mit Speicherchip 22 werden individualisierende Daten in den Chip 22 eingespeist. Denkbar ist es aber auch, den Chip 22 bereits vor dem Einnähen in den Wischmop 10 mit Daten zu versehen.

Ferner ist es bei entsprechender Größe des Speicherchips auch möglich, diesen in einen Randstreifen 24 des Wischmops 10 einzunähen.

## Patentansprüche

1. Wischmop (10), welcher an einer Seite einen Reinigungsflor (12) und an der gegenüberliegenden Seite (14) zwei an Seitenendbereichen vorgesehene, zueinander hin offene Aufnahmetaschen (20) aufweist, die mittels aufgesetzter Taschenlagen (16) gebildet sind und in die die Endabschnitte eines vorzugsweise klappbaren Wischmophalters einsteckbar sind, **dadurch gekennzeichnet, daß** wenigstens ein Datenträger fest mit dem Wischmop (10) verbunden ist und daß der Datenträger einen elektronischen Speicherchip (22) umfasst, wobei der Datenträger mit den Wischmop individualisierenden Daten versehen ist, welche durch ein Lesegerät erfaßbar sind.

2. Wischmop nach Anspruch 1, **dadurch gekennzeichnet, daß** der Speicherchip durch eine Lese-/Schreibgerät sowohl hinsichtlich der gespeicherten Daten lesbar als auch mit aktualisierten Daten beschreibbar ist.

3. Wischmop nach Anspruch 1 oder 2, **dadurch gekennzeichnet, daß** der Speicherchip (22) in eine Taschenlage (16) des Wischmops (10) eingenäht ist.

4. Wischmop nach einem der Ansprüche 1 bis 3, **dadurch gekennzeichnet, daß** der Speicherchip (22) in einen Randstreifen (24) des Wischmops (10) eingenäht ist.

5. Wischmop nach einem der Ansprüche 1 bis 4, **dadurch gekennzeichnet, daß** ein Speicherchip (22) in die Taschenlage (16) eines ersten Wischmops(10) so eingenäht ist, daß ein Chip (22a) eines zu Lager- und Transportzwecken zweiten, auf dem ersten Wischmop (10) aufliegenden Wischmop (10a) zum Chip (22) des ersten Wischmops(10) versetzt angeordnet ist.

6. Wischmop nach einem der Ansprüche 1 bis 5, **dadurch gekennzeichnet, daß** der Speicherchip (22) Teil eines Transponders ist.

7. Wischmop nach einem der Ansprüche 1 bis 6, **dadurch gekennzeichnet, daß** der Wischmop (10) in eine desinfizierte Kunststoffolie eingeschweißt ist.

## Claims

1. Mop (10) which has on one side a cleaning fabric (12) and on the opposite side (14) two receiving pockets (20) which are open towards one another and are provided at side end regions, said receiving pockets being formed by means of attached pocket layers (16) and it being possible for the end sections of a preferably foldable mop holder to be inserted into said receiving pockets, **characterized in that** at least one data carrier is permanently connected to the mop (10) and **in that** the data carrier comprises an electronic memory chip (22), wherein the data carrier is provided with data which characterizes the mop, it being possible for said data to be detected by a reader.

2. Mop according to Claim 1, **characterized in that** the memory chip can be read with regard to the stored data and also can be written with updated data by means of a reader/writer.

3. Mop according to Claim 1 or 2, **characterized in that** the memory chip (22) is sewn into a pocket layer (16) of the mop (10).

4. Mop according to one of Claims 1 to 3, **characterized in that** the memory chip (22) is sewn into an edge strip (24) of the mop (10).

5. Mop according to one of Claims 1 to 4, **characterized in that** a memory chip (22) is sewn into the pocket layer (16) of a first mop (10) in such a way that a chip (22a) of a second mop (10a) lying on top of the first mop (10) for storage and transport purposes is arranged offset with respect to the chip (22) of the first mop (10).

6. Mop according to one of Claims 1 to 5, **characterized in that** the memory chip (22) forms part of a transponder.

7. Mop according to one of Claims 1 to 6, **characterized in that** the mop (10) is sealed in a disinfected plastic film.

## Revendications

1. Balai à laver (10), qui présente un voile de nettoyage (12) sur une face et sur la face opposée (14), prévues au niveau des extrémités latérales, deux poches (20) ouvertes l'une envers l'autre, qui sont formées à l'aide de couches rapportées (16), dans lesquelles peuvent être insérées les parties terminales d'un support de balai à laver, qui est de préférence pliant, **caractérisé en ce qu'**au moins un support de données est relié fixement au balai à laver (10) et que le support de données comprend une puce mémoire (22) électronique, le support de données ayant reçu des données individualisant le balai à laver et pouvant être lues par un lecteur.

2. Balai à laver suivant la revendication 1, **caractérisé en ce qu'**aussi bien la lecture des données mémorisées de la puce mémoire, que l'écriture de données actualisées dans la puce mémoire sont possibles au moyen d'un dispositif de lecture/écriture.

3. Balai à laver suivant la revendication 1, **caractérisé en ce que** la puce mémoire (22) est cousue dans une couche de la poche (16) du balai à laver (10).

4. Balai à laver suivant la revendication 1 ou 2, **caractérisé en ce que** la puce mémoire (22) est cousue dans une bordure 24 du balai à laver (10).

5. Balai à laver suivant une des revendications 1 à 4, **caractérisé en ce qu'**une puce mémoire (22) est cousue dans la couche de la poche (16) d'un premier balai à laver (10), de manière qu'une puce (22a) d'un second balai à laver (10a), qui repose, pour des raisons de stockage et de transport, sur le premier balai à laver (10), est disposée décalée par rapport à la puce (22) du premier balai à laver (10).

6. Balai à laver suivant une des revendications 1 à 5, **caractérisé en ce que** la puce mémoire (22) constitue une partie d'un répondeur.

7. Balai à laver suivant une des revendications 1 à 6, **caractérisé en ce que** le balai à laver (10) est soudé dans une feuille en matière plastique désinfectée.
